# EUROPEAN PATENT APPLICATION

(11) **EP 3 841 880 A1**
(43) Date of publication of application: **30.06.2021**
(21) Application number: 20216599.9
(22) Date of filing: 22.12.2020
(51) Int. Cl.: A01N 59/14, C05D 1/00, C05D 9/00, A01P 21/00, C01B 35/12

(54) **POTASSIUM BORON-CONTAINING COMPOSITIONS AND THEIR PREPARATION**

(30) Priority: 27.12.2019 US 201962954127 P
(71) Applicant: U.S. Borax Inc., Wilmington, DE 19808 (US)
(72) Inventor: KOKEL, Julien, 59210 Coudekerque-Branche (FR); WAWRZOS, Frank A., Chicago, IL 60601 (US); DE SEQUEIRA, Cleiton, Chicago, IL 60601 (US)
(74) Representative: AWA Sweden AB

(57) **Abstract**

The present disclose provides a process. In an embodiment, the process includes reacting boric acid with potassium carbonate in an aqueous solution. The process includes forming a stable aqueous suspension comprising particles of potassium pentaborate. The present disclosure also provides the composition formed the process. In an embodiment, the composition includes a stable aqueous suspension of particles of potassium pentaborate, the suspension composed of at least 8% (w/w) boron and at least 5% (w/w) potassium oxide (K₂O).

## Description

### BACKGROUND

Potassium is important to plant life, and is one of the three main macronutrients that promotes strong stem growth, movement of water in plants, flowering, and fruiting. In particular, potassium is important for the loading of sucrose and enhancing the rate of mass-driven solute transport in the phloem. For example, potassium enables a high pH to be maintained in the phloem for sucrose loading, and contributes to the osmotic potential in the phloem tubes and, thus, the transport rates of photosynthates from source (e.g., leaves) to sink (e.g., roots, young shoots, and developing seed). In potassium-sufficient plants, about half of the carbon-labelled photosynthates are exported from the source leaf to other organs within about 90 minutes. In contrast, in potassium-deficient plants, the export rates are much lower, even after 4 hours. (Hawkestfor, M et al., Functions of Macronutrients. In Marschner, P. 2012. Mineral Nutrition of Higher Plants).

Boron is another element essential for plant growth. Its role was discovered in the 1920s and since then, boron deficiency is found in many crops. Boron deficiency can be corrected by applying a fertilizer product containing boron in the form of a solid or a liquid. In fact, solutions based on boron can be sprayed on plants or crops, such as perennials and annuals. These solutions are generally mixed in the spray tank with other agrochemicals or fertilizers. The latter method of application may be preferable since at peak requirement times the boron needs of the growing plant can frequently exceed its ability to obtain its needs through the roots. Mixing with other sprays as part of a program enables the grower to time this availability and save application cost.

Boron deficiency shows in clearly defined ways in certain crops. Generally, by the time visible symptoms are seen, yields will already have been adversely affected. The best way to establish need is either through soil testing or through tissue analysis. In this way, boron supplementation can form part of a 'balanced nutrition' approach to crop fertilization.

Maintaining a proper balance of potassium and boron nutrients during plant growth is important for optimizing plant growth and promoting fruitful harvests of crops. Consequently, the art recognizes the need for compositions containing potassium and boron formulated for application to, and uptake by, plants. The art further recognizes the need for processes for producing these potassium/boron-containing compositions.

### SUMMARY

The present disclose provides a process. In an embodiment, the process includes reacting boric acid with potassium carbonate in an aqueous solution. The process includes forming a stable aqueous suspension comprising particles of potassium pentaborate.

The present disclosure also provides the composition formed the process. In an embodiment, the composition includes a stable aqueous suspension of particles of potassium pentaborate, the suspension composed of at least 8% (w/w) boron and at least 5% (w/w) potassium oxide (K₂O).

### DEFINITIONS

In order for the present disclosure to be more readily understood, certain terms are first defined below. Additional definitions for the following terms and other terms are set forth throughout the specification.

For purposes of United States patent practice, the contents of any referenced patent, patent application or publication are incorporated by reference in their entirety (or its equivalent US version is so incorporated by reference) especially with respect to the disclosure of definitions (to the extent not inconsistent with any definitions specifically provided in this disclosure) and general knowledge in the art.

The numerical ranges disclosed herein include all values from, and including, the lower and upper value. For ranges containing explicit values (e.g., from 1 or 2, or 3 to 5, or 6, or 7), any subrange between any two explicit values used herein is included (e.g., the range 1-7 above includes the subranges from 1 to 2; from 2 to 6; from 5 to 7; from 3 to 7; from 5 to 6; etc.).

Unless stated to the contrary, implicit from the context, or customary in the art, all parts and percents are based on weight and all test methods are current as of the filing date of this disclosure.

The term "composition" refers to a mixture of materials which comprise the composition, as well as reaction products and decomposition products formed from the materials of the composition.

The terms "comprising," "including," "having" and their derivatives, are not intended to exclude the presence of any additional component, step or procedure, whether or not the same is specifically disclosed. In order to avoid any doubt, all compositions claimed through use of the term "comprising" may include any additional additive, adjuvant, or compound, whether polymeric or otherwise, unless stated to the contrary. In contrast, the term "consisting essentially of" excludes from the scope of any succeeding recitation any other component, step, or procedure, excepting those that are not essential to operability. The term "consisting of" excludes any component, step, or procedure not specifically delineated or listed. The term "or," unless stated otherwise, refers to the listed members individually as well as in any combination. Use of the singular includes use of the plural and vice versa.

The term "suspension" is a system in which particles are uniformly dispersed in a liquid medium.

The term "(w/w)" refers to weight/weight (or weight to weight) and represents a weight of a compound or chemical entity relative to a total weight of the composition or suspension. The "w/w" is the mass (in grams) of the compound (or solute) divided by the mass (in grams) of the total suspension (or solution) with result reported in percent, or "%".

### TEST METHODS

Bulk density is the mass of the suspension divided by the volume of the suspension with result reported in grams (g) per milliliter (mL), g/mL.

Dynamic viscosity is a fluid's resistance to flow and is measured by a Brookfield viscometer, at 20 rpm, using RV spindle #4.

The term pH is a measure of the hydrogen ion concentration in a solution. The pH is measured in accordance with ASTM E70 testing procedure for measuring pH of a solution with a glass electrode.

### DETAILED DESCRIPTION

### Process

The present disclosure provides a process. In an embodiment, the process includes reacting boric acid with potassium carbonate or potassium bicarbonate in an aqueous solution to form a stable aqueous suspension including particles of potassium pentaborate. Potassium pentaborate has a chemical formula of K₂O · (B₂O₃)₅ · 8H₂O. Boric acid has a chemical formula of H₃BO₃. Potassium carbonate has a chemical formula of K₂CO₃. Potassium bicarbonate has a chemical formula of KHCO₃.

In an embodiment, the process includes reacting boric acid with potassium carbonate.

The reaction occurs in a reaction tank, and optionally occurs under agitation, or otherwise occurs under mixing. In an embodiment, the process includes reacting boric acid and potassium carbonate at a boric acid to potassium carbonate molar ratio from 5:1 to 15:1. In a further embodiment, the molar ratio of boric acid to potassium carbonate is 6:1, or 8:1, or 10:1, or 11:1, or 12:1, or 13:1, or 14:1, or 15:1.

In an embodiment, the process includes reacting boric acid and potassium bicarbonate, under mixing, at a boric acid to potassium bicarbonate molar ratio from 2.5:1 to 7.5:1.

In an embodiment, the process includes first adding boric acid to the aqueous solution in the reaction tank and then subsequently adding the potassium carbonate (or the potassium bicarbonate). The boric acid is added first to decrease the pH of the reaction medium and to accelerate the reaction. The reaction is complete in a short time (or from 1 minute to 90 minutes) because potassium pentaborate saturated solution has a pH value of about 7.5, or 7.5. The pKa of the acid/base coupling (CO₂/HCO₃) is about 6.4, driving CO₂ generation. The CO₂ (carbon dioxide) is a gas which exits (by way of evaporation) from the aqueous reaction medium and drives the reaction to completion. The final stable suspension (upon completion of the reaction) has a pH from 6.5 to 8.5, or from 7.0 to 7.5.

In an embodiment, the process includes adding a viscosity modifier to water to form an aqueous suspension medium. A "viscosity modifier," as used herein, is a component that when added to an aqueous medium (or water), increases the viscosity of the aqueous medium (or water). Nonlimiting examples of suitable viscosity modifiers include clays, polysaccharides, acrylates, and combinations thereof. Nonlimiting examples of suitable clays include natural and/or synthetic layered silicates such as montmorillonite, bentonite, kaolinite, kaolin, mica, hectorite, sauconite, fluorohectorite, saponites, attapulgite, sepiolite, beidellite, ledikite, nontronite, volkonskoite, stevensite, vermiculite, halloysite, talc, pyrophillite, palygorskite, illite, phlogopite, biotite, chlorite, nacrite, dickite, suconite, magadiite, kenyaite, Laponite®, tainiolite, synthetic fluoromica and combinations thereof.

Nonlimiting examples of suitable polysaccharides for viscosity modifier include natural sugars (e.g., xanthan gum, glucose, fructose, galactose, mannose, arabinose, ribose, and xylose); alternatively or additionally, in an embodiment, a polysaccharide comprises one or more non-natural amino acids (e.g. modified sugars such as 2'-fluororibose, 2'-deoxyribose, and hexose).

Nonlimiting examples of suitable acrylates (for viscosity modifier) include methy acrylate, ethyl acrylate, ethyl methacrylate, propyl acrylate, propyl methacrylate, butyl acrylate, butyl methacrylate methyl methacrylate, methyl ethacrylate, octyl acrylate, lauryl acrylate, stearyl acrylate, behenyl acrylate, and combinations thereof.

In an embodiment, the process includes adding a first viscosity modifier and a second viscosity modifier to water at a temperature from 1°C to 100°C to form the aqueous suspension medium. In a further embodiment, the first viscosity modifier is a clay (such as bentonite clay) and the second viscosity modifier is a polysaccharide (such as xanthan gum). The process includes adding bentonite clay and xanthan gum to water and mixing the aqueous medium at a temperature from 25 °C to 70 °C for a first duration from 10 minutes to 2 hours to form the aqueous suspension medium. Once the aqueous suspension medium is formed, the process includes adding boric acid and the potassium carbonate to the aqueous suspension medium. The process subsequently includes reacting and mixing the boric acid and the potassium carbonate in the aqueous suspension medium at a temperature from 25 °C to 70 °C, for a duration from 30 minutes to five hours, or more and maintaining the pH in the reaction tank from 3.5 to less than 6.4. The process includes forming a stable aqueous suspension composed of particles of potassium pentaborate suspended in the aqueous suspension medium.

In an embodiment, the process includes adding from 0.1% to 5% (w/w) viscosity modifier to water to form the aqueous suspension medium, reacting the boric acid and the potassium carbonate at a boric acid to potassium carbonate molar ratio from 10:1, and forming a stable aqueous suspension composed of particles of potassium pentaborate suspended in the aqueous suspension medium. The viscosity modifier is a combination of two viscosity modifiers, a first viscosity modifier that is the bentonite clay and a second viscosity modifier that is xanthan gum. The boric acid and the potassium carbonate are reacted, or otherwise mixed, in the aqueous suspension medium to the exclusion of (or otherwise in the absence of) potassium hydroxide and/or to the exclusion of (or otherwise in the absence of) sodium. The process forms a stable aqueous suspension with particles of potassium pentaborate suspended therein. The term "stable aqueous suspension with particles of potassium pentaborate," (interchangeably referred to as "stable aqueous suspension") as used herein, is an aqueous suspension with particles of suspended potassium pentaborate that exhibits (i) no potassium pentaborate particles (interchangeably referred to as "potassium pentaborate crystals") visibly perceptible to the naked eye and (ii) no settlement of potassium pentaborate particles visibly perceptible to the naked eye after the stable suspension has been stored at ambient conditions (i.e., a temperature from 5°C to 25°C) for at least two weeks (or at least 14 days). In other words, the suspended potassium pentaborate particles are so small that an onlooker observing (with the naked eye) the stable aqueous suspension containing the particles of potassium pentaborate cannot see, or otherwise cannot visually detect: (i) any discrete potassium pentaborate particles in suspension and/or (ii) any settlement of potassium pentaborate particles (or other particles) within the aqueous suspension.

In an embodiment, the stable aqueous suspension with particles of potassium pentaborate exhibits no potassium pentaborate particles that are visibly perceptible to the naked eye after the aqueous suspension has been stored at ambient conditions for a duration from two weeks, or four weeks, or 8 weeks to 10 weeks, or 12 weeks or 16 weeks or more.

In an embodiment, the process includes forming a stable aqueous suspension with particles of potassium pentaborate having one, some, or all of the following properties:
(i) from 8% (w/w), or 9%, or 10%, or 11% to 12%, or 13%(w/w) boron; and/or
(ii) from 5% (w/w), or 10 to 15, or 20% (w/w) potassium oxide; and/or
(iii) from 30% (w/w), 35 %, or 40% to 50, or 55% or 60% (w/w) potassium pentaborate particles; and/or
(iv) from 0.1% (w/w) to 5% (w/w) of viscosity modifier;
(v) a pH from 6.5 to 8.5; and/or
(vi) a dynamic viscosity from 1000 cP to 7000 cP at 19.3°C; and/or
(vii) a bulk density from 1.2 to 1.4 g/mL.

In an embodiment, the process includes adding a dispersant to the aqueous suspension medium. Non-limiting examples of dispersants include acrylic polymers, water soluble polymeric dispersants, such as polyethylene oxide, hydrolysed polyvinyl acetates, polyvinyl pyrrolidone, polyacrylamide, and polyvinyl alcohol.

### Composition

The present disclosure provides a composition. The composition is the reaction product of the foregoing process. The composition includes a stable aqueous suspension composed of particles of potassium pentaborate suspended therein, the suspension further including at least 8% (w/w) boron and at least 5% (w/w) potassium oxide (K₂O).

In an embodiment, the stable aqueous suspension of the composition includes particles of potassium pentaborate in an amount from 30% to 60% (w/w). In a further embodiment, the stable aqueous suspension includes particles of potassium pentaborate in an amount from 30% (w/w), or 31%, or 32%, or 33%, or 34%, or 35%, or 36%, or 37%, or 38%, or 39%, or 40%, or 41%, or 42%, or 43%, or 44%, or 45% to 46%, or 47%, or 48%, or 49%, or 50%, or 51%, or 52%, or 53%, or 54%, or 55%, or 56%, or 57%, or 58%, or 59%, or 60% (w/w).

In an embodiment, the stable aqueous suspension of the composition includes boron in an amount from 8% (w/w) to 13% (w/w) and from 5% to 20% (w/w) potassium oxide. In a further embodiment, the stable aqueous suspension includes from 8% (w/w), or 9%, or 10%, to 11%, or 12%, or 13% (w/w) boron, and from 5% (w/w), or 6%, or 7%, or 8%, or 9%, or 10%, or 11%, or 12%, or 13% to 14%, or 15%, or 16%, or 17%, or 18%, or 19%, or 20% (w/w) potassium oxide, or more.

The potassium pentaborate particles in the stable aqueous medium have an average particle size of less than 100 µm. The term "average particle size" refers to the diameter of the potassium pentaborate particles in the suspension. For potassium pentaborate particles that are not spherical, the diameter of the potassium pentaborate particle is the average of the long and short axes of the particle. Laser-diffraction techniques are used to measure potassium pentaborate particle size. Particle size may be measured on a Beckman-Coulter LS230 laser-diffraction particle size analyzer or other suitable device, for example.

In an embodiment, the potassium pentaborate particles have an average particle size less than 75 µm, or from 1 µm to 75 µm, or from 1 µm to 50 µm, or from 1 µm to 40 µm.

In an embodiment, the stable aqueous suspension of the composition includes a viscosity modifier in an amount from 0.1% (w/w) to 5% (w/w). The viscosity modifier is present in an amount sufficient to stabilize the potassium pentaborate particles in the aqueous suspension. The viscosity modifier allows the stable aqueous suspension to be sprayed, pumped, or poured. In a further embodiment, the viscosity modifier is a combination of two viscosity modifiers, a first viscosity modifier that is a clay (such as bentonite clay) and a second viscosity modifier that is a polysaccharide (such as xanthan gum). The stable aqueous suspension includes the first viscosity modifier and the second viscosity modifier in an aggregate amount from 0.1% (w/w), or 1%, or 2%, or 3%, to 4%, or 5% (w/w).

In an embodiment, the stable aqueous suspension of the composition has a pH from 6.5 to 8.5. In a further embodiment, the stable aqueous suspension has a pH from 6.5, or 6.6, or 6.7, or 6.8, or 6.9, or 7.0, or 7.1, or 7.2, or 7.3, or 7.4, or 7.5 to 7.6, or 7.7, or 7.8, or 7.9, or 8, or 8.1, or 8.2, or 8.3, or 8.4, or 8.5.

In an embodiment, the stable aqueous suspension of the composition has a dynamic viscosity from 1000 cP to 7000 cP at 19.3°C. In a further embodiment, the stable aqueous suspension has a dynamic viscosity of from 1000 cP, or 1200 cP, or 1400 cP, or 1600 cP, or 1800 cP, or 2000 cP, or 2200 cP, or 2400 cP, or 2600 cP, or 2800 cP, or 3000 cP, or 3200 cP, or 3400 cP, or 3600 cP, or 3800 cP, or 4000 cP, or 4200 cP, or 4400 cP, or 4600 cP, or 4800 cP to 5000 cP, or 5200 cP, or 5400 cP, or 5600 cP, or 5800 cP, or 6000 cP, or 6200 cP, or 6400 cP, or 6600 cP, or 6800 cP, or 7000 cP.

In an embodiment, the stable aqueous suspension of the composition has a bulk density from 1.2 to 1.4 g/mL.

In an embodiment, the stable aqueous suspension with particles of potassium pentaborate has one, some, or all of the following components:
(i) from 8% (w/w), or 9%, or 10%, or 11% to 12%, or 13%(w/w) boron; and/or
(ii) from 5% (w/w), or 10 to 15, or 20% (w/w) potassium oxide; and/or
(iii) from 30% (w/w), 35 %, or 40% to 50, or 55% or 60% (w/w) potassium pentaborate particles; and/or
(iv) from 0.1% (w/w) to 5% (w/w) of viscosity modifier that is bentonite clay and xanthan gum;
and the stable aqueous suspension has one, some, or all of the following properties:
(v) a pH from 6.5 to 8.5; and/or
(vi) a dynamic viscosity from 1000 cP to 7000 cP at 19.3°C; and/or
(vii) a bulk density from 1.2 to 1.4 g/mL.

Implementations of the present composition with a stable aqueous suspension of particles of potassium pentaborate are useful for a wide range of applications, including but not limited to: fertilizer to supply nutrients, such as potassium and boron to plants (e.g., potassium and boron increase the transport of sugars to growing parts of the plant, and these nutrients have the potential to increase sugar concentrations in fruits and sugar rich crops, as well as crop yield), a wood preservative or biocide (e.g., borates are deadly to pests, such as termites, carpenter ants, and wood boring beetles, while possessing low acute mammalian toxicity), additives for wood or paper matches (e.g., potassium pentaborate may be useful in controlling the burning rate and may reduce or eliminate after-glow effects), a cement additive (e.g., potassium pentaborate inhibits the set of cement producing slow-setting cements useful in applications such as oil well drilling), cover fluxes in metal refining (e.g., useful in refining precious metals, copper, and their alloys, as well as a flux compound that reduces fluorine emissions), welding, soldering, and/or brazing fluxes (e.g., potassium pentaborate may be used as flux melts and dissolves oxide impurities on the metal surfaces to be joined), and lubricating oil additives (e.g., potassium pentaborate improves load-carrying capacity and wear protection when incorporated in industrial and automotive lubricants), among others.

In an embodiment, the composition includes a stable aqueous suspension which also includes potassium and boron microcrystals, which may advantageously be formulated for spraying, pouring, or pumping onto a target (e.g., crops or any of the aforementioned applications where there is a need for potassium pentaborate compositions).

In an embodiment, the stable aqueous suspension of potassium pentaborate particles readily dissolves when diluted with water, making an effective formulation for delivering potassium and boron to the target. The present composition with the stable aqueous suspension is ready to use, or otherwise ready to apply without the use of organic solvents or "chemicals of concern." The present composition is pourable, sprayable, or pumpable), non-oily, and substantially free of organic solvents.

### Examples

The following examples are presented by way of illustration and are not meant to be limiting in any way.

### Comparative Sample 1:

### Forming Potassium Tetraborate using Potassium Hydroxide

A borate-suspension was prepared by initially heating 307 grams (g) of water to approximately 40 °C. With agitation, 17.5 g of a first viscosity modifying agent (e.g., bentonite clay) and 1.4 g of a second modifying agent (e.g., xanthan gum) were added to the composition. The composition was allowed to mix for a duration (e.g., 40 minutes). 464 g of boric acid and 211 g of potassium hydroxide were added gradually to the composition. The composition was allowed to mix for a second duration (e.g., 90 minutes), which resulted in the formation of potassium tetraborate. It is contemplated that the reaction proceeds as follows:

4*H*₃*BO*₃ + 2*KOH* → K₂O · (B₂O₃)₂ · 4H₂O + 3H₃O

The yield of potassium tetraborate (K₂O · (B₂O₃)₂ · 44H₂O) was 573 g with a final concentration of 57.3%. The product is a suspension having 8.1% boron and 17.8% K₂O.

The borate-suspension containing potassium tetraborate resulted in an unstable suspension having crystals that were visually perceptible by the naked eye, and that developed after one week when stored at a temperature of 25 °C.

### Comparative Sample 2:

### Forming Potassium Tetraborate using Potassium Carbonate and Boric Acid

A borate-suspension was prepared by initially heating 340 g of water to approximately 40 °C. With agitation, 17.5 g of a first viscosity modifying agent (e.g., bentonite clay) and 1.4 g of a second modifying agent (e.g., xanthan gum) were added to the composition. The composition was allowed to mix for a duration (e.g., 40 minutes). 464 g of boric acid and 259 g potassium carbonate were added gradually to the composition. The composition was allowed to mix for a second duration (e.g., 90 minutes), which resulted in the formation of potassium tetraborate. It is contemplated that the reaction proceeds as follows:

4 *H*₃*BO*₃ + K₂*CO*₃ → K₂O · (B₂O₃)₂ · 4H₂O + 2H₂O + CO₂

The yield of potassium tetraborate (K₂O · (B₂O₃)₂ · 4H₂O) was 573 g with a final concentration of 57.3%. The reaction did not go to completion. This is attributed, in part, to the pH becoming too basic (pH greater than 6.4).

The borate-suspension containing potassium tetraborate resulted in an unstable suspension having crystals that were visually perceptible by the naked eye, and that developed after one week when stored at a temperature of 25 °C.

### Comparative Sample 3:

### Forming Potassium Tetraborate using Potassium Carbonate, Potassium Hydroxide, and Boric Acid

A borate-suspension was prepared by initially adding 323 g of water to a reaction tank. With agitation, 17.5 g of a first viscosity modifying agent (e.g., bentonite clay) and 1.4 g of a second modifying agent (e.g., xanthan gum) were added to the composition. The composition was allowed to mix for a duration (e.g., 40 minutes). 464 g of boric acid, 130 g of potassium carbonate, and 105 g of potassium hydroxide were added gradually to the composition. The composition was allowed to mix for a second duration (e.g., 90 minutes), which resulted in the formation of potassium tetraborate. It is contemplated that the reaction proceeds as follows:

4 *H*₃*BO*₃ + 0.5K₂*CO*₃ + 1*KOH* → K₂O · (B₂O₃)₂ · 4H₂O + 2.5H₂O + 0.5 CO₂

The yield of potassium tetraborate (K₂O · (B₂O₃)₂ · 44H₂O) was 573 g with a final concentration of 57.3%. The initial temperature of the water was 16 °C and after the addition of potassium hydroxide the temperature of the mixture rose to 61 °C.

The borate-suspension comprising potassium tetraborate resulted in an unstable suspension having crystals that were visually perceptible by the naked eye, and that developed after one week when stored at a temperature of 25 °C.

### Comparative Sample 4:

### Forming Potassium Tetraborate using Potassium Carbonate, Potassium Hydroxide, and Boric Acid

A borate-suspension was prepared by initially adding 576 g of water to a reaction tank. With agitation, 26.3 g of a first viscosity modifying agent (e.g., bentonite clay) and 2.1 g of a second modifying agent (e.g., xanthan gum) were added to the composition. The composition was allowed to mix for a duration (e.g., 40 minutes). 638 g of boric acid, 239 g of potassium carbonate, and 95 g of potassium hydroxide were added gradually to the composition. The composition was allowed to mix for a second duration (e.g., 90 minutes), which resulted in the formation of potassium tetraborate. The stoichiometric ratios used for the reaction are illustrated as follows:

4 *H*₃*BO*₃ + 0.67 K₂*CO*₃ + 0.66 *KOH* → K₂O · (B₂O₃)₂ · 4H₂O + 2.33H₂O + 0.67 CO₂

The yield of potassium tetraborate (K₂O · (B₂O₃)₂ · 4H₂O) was 573 g with a final concentration of 52.5%. The initial temperature of the water was 19 °C and after the addition of potassium hydroxide the temperature of the mixture rose to 42 °C. The reaction did not proceed to completion and the final suspension included unreacted potassium carbonate.

The borate-suspension comprising potassium tetraborate resulted in an unstable suspension having crystals that were visually perceptible by the naked eye, and that developed after one week when stored at a temperature of 25 °C.

### Comparative Sample 5:

### Forming Potassium Tetraborate using Potassium Carbonate, Potassium Hydroxide, and Boric Acid

A borate-suspension was prepared by initially adding 373 g of water to a reaction tank. With agitation, 17.5 g of a first viscosity modifying agent (e.g., bentonite clay) and 1.4 g of a second modifying agent (e.g., xanthan gum) were added to the composition. The composition was allowed to mix for a duration (e.g., 40 minutes). 425 g of boric acid, 140 g of potassium carbonate, and 88 g of potassium hydroxide were added gradually to the composition. The composition was allowed to mix for a second duration (e.g., 90 minutes), which resulted in the formation of potassium tetraborate. The stoichiometric ratios used for the reaction are illustrated as follows:

4 *H*₃*BO*₃ + 0.59 K₂*CO*₃ + 0.82 *KOH* → K₂O · (B₂O₃)₂ · 4H₂O + 2.41H₂O + 0.59 CO₂

The yield of potassium tetraborate (K₂O · (B₂O₃)₂ · 4H₂O) was 525 g with a final concentration of 52.5%. The resulting product was a homogenous suspension. Reactions having a final potassium boron tetrahydrate concentration of 51.5%, or less, resulting in a non-homogenous suspension.

The borate-suspension comprising potassium tetraborate resulted in an unstable suspension having crystals that were visually perceptible by the naked eye, and that developed after one week when stored at a temperature of 25 °C.

### Inventive Example 6:

### Forming Potassium Pentaborate using Potassium Carbonate and Boric Acid

A borate-suspension was prepared by initially adding 738 g of water to a reaction tank. With agitation, 17.5 g of a first viscosity modifying agent (e.g., bentonite clay) and 1.4 g of a second modifying agent (e.g., xanthan gum) were added to the composition. The composition was allowed to mix for a duration (e.g., 40 minutes). 211 g of boric acid and 47 g of potassium carbonate were added gradually to the composition. The composition was allowed to mix for a second duration (e.g., 90 minutes), which resulted in the formation of potassium pentaborate. The stoichiometric ratios used for the reaction are illustrated as follows:

*10H*₃*BO*₃ + 1 K₂*CO*₃ → K₂O · (B₂O₃)₅ · 8H₂O + 7H₂O + 1 CO₂

The yield of potassium pentaborate (K₂O · (B₂O₃)₅ · 8H₂O) was 200 g with a final concentration of 20% in the suspension (w/w), and the reaction yielded 15 g of CO₂ gas. The resulting product was a homogeneous stable aqueous suspension. The composition containing potassium pentaborate resulted in a stable aqueous suspension that exhibited no crystals visibly perceptible to the naked eye and no settlement of particles after being stored at 25°C for at least two weeks.

Unlike potassium hydroxide, which has a strongly exothermic enthalpy of dissolution, potassium carbonate significantly reduces the expected rise of temperature during the course of the reaction. Potassium carbonate has an enthalpy of dissolution of -199 KJ/kg and carbon dioxide has a latent heat of vaporization of 347.4 KJ/kg. In comparative sample 2, the expected rise of temperature during the course of reaction is about 11 °C.

### Inventive Example 7:

### Forming Potassium Pentaborate using Potassium Carbonate and Boric Acid

A borate-suspension was prepared by initially adding 616 g of water to a reaction tank. With agitation, 17.5 g of a first viscosity modifying agent (e.g., bentonite clay) and 1.4 g of a second modifying agent (e.g., xanthan gum) were added to the composition. The composition was allowed to mix for a duration (e.g., 40 minutes). 316 g of boric acid and 71 g of potassium carbonate were added gradually to the composition. The composition was allowed to mix for a second duration (e.g., 90 minutes), which resulted in the formation of potassium pentaborate. The stoichiometric ratios used for the reaction are illustrated as follows:

10*H*₃*BO*₃ + 1 K₂*CO*₃ → K₂O · (B₂O₃)₅ · 8H₂O + 7H₂O + 1 CO₂

The yield of potassium pentaborate (K₂O · (B₂O₃)₅ · 8H₂O) was 300 g with a final concentration of 30% in the suspension (w/w), and the reaction yielded 23 g of CO₂ gas. The resulting product was a homogenous stable aqueous suspension. The composition containing potassium pentaborate resulted in a stable aqueous suspension that exhibited no crystals visibly perceptible to the naked eye and no settlement of particles after being stored at 25°C for at least two weeks.

### Inventive Example 8:

### Forming Potassium Pentaborate using Potassium Carbonate and Boric Acid

A borate-suspension was prepared by initially adding 434 g of water to a reaction tank. With agitation, 17.5 g of a first viscosity modifying agent (e.g., bentonite clay) and 1.4 g of a second modifying agent (e.g., xanthan gum) were added to the composition. The composition was allowed to mix for a duration (e.g., 40 minutes). 475 g of boric acid and 106 g of potassium carbonate were added gradually to the composition. The composition was allowed to mix for a second duration (e.g., 90 minutes), which resulted in the formation of potassium pentaborate. The stoichiometric ratios used for the reaction are illustrated as follows:

10*H₃BO₃* + 1 K₂*CO*₃ → K₂O · (B₂O₃)₅ · 8H₂O + 7H₂O + 1 CO₂

The yield of potassium pentaborate (K₂O · (B₂O₃)₅ · 8H₂O) was 450 g with a final concentration of 45% in the suspension (w/w), and the reaction yielded 34 g of CO₂ gas. The resulting product was a homogenous stable aqueous suspension. The composition containing potassium pentaborate resulted in a stable aqueous suspension that exhibited no crystals visibly perceptible to the naked eye and no settlement of particles after being stored at 25°C for at least two weeks.

The dynamic viscosity of the stable aqueous suspension was 1680 cP. A similar reaction was performed with a yield of stable aqueous suspension with 50% (w/w) potassium pentaborate, and dynamic viscosity of 3000 cP, and a bulk density of 1.28 g/mL.

### Inventive Example 9:

### Forming Potassium Pentaborate using Potassium Carbonate and Boric Acid

A borate-suspension was prepared by initially adding 325 g of water to a reaction tank. With agitation, 17.5 g of a first viscosity modifying agent (e.g., bentonite clay) and 1.4 g of a second modifying agent (e.g., xanthan gum) were added to the composition. The composition was allowed to mix for a duration (e.g., 40 minutes). 569 g of boric acid and 127 g of potassium carbonate were added gradually to the composition. The composition was allowed to mix for a second duration (e.g., 90 minutes), which resulted in the formation of potassium pentaborate. The stoichiometric ratios used for the reaction are illustrated as follows:

10*H₃BO₃* + 1 K₂CO₃ → K₂O · (B₂O₃)₅ · 8H₂O + 7H₂O + 1 CO₂

The yield of potassium pentaborate (K₂O · (B₂O₃)₅ · 8H₂O) was 540 g with a final concentration of 54% in the suspension (w/w), and the reaction yielded 41 g of CO₂ gas. The resulting product was a homogenous stable aqueous suspension. The composition containing potassium pentaborate resulted in a stable aqueous suspension that exhibited no crystals visibly perceptible to the naked eye and no settlement of particles after being stored at 25°C for at least two weeks.

The viscosity of the stable suspension was 4960 cP at 19.3 °C. The stable aqueous suspension had a bulk density of 1.31 g/mL. The pH of the stable aqueous suspension was 7.3.

### Comparative Sample 10:

### Forming Potassium Pentaborate using Potassium Carbonate and Boric Acid

A borate-suspension was prepared by initially adding 347 g of water to a reaction tank. With agitation, 17.5 g of a first viscosity modifying agent (e.g., bentonite clay) and 1.4 g of a second modifying agent (e.g., xanthan gum) were added to the composition. The composition was allowed to mix for a duration (e.g., 40 minutes). 527 g of boric acid and 106 g of potassium hydroxide were added gradually to the composition. The composition was allowed to mix for a second duration (e.g., 90 minutes), which resulted in the formation of potassium pentaborate. The stoichiometric ratios used for the reaction are illustrated as follows:

10*H₃BO₃* + 2 KOH → K₂O · (B₂O₃)₅ · 8H₂O + 8H₂O

The yield of potassium pentaborate (K₂O · (B₂O₃)₅ · 8H₂O) was 500 g with a final concentration of 54% in the suspension (w/w).

The resulting product was a non-stable homogenous suspension. The suspension formed crystals visibly perceptible to the naked eye within 90 minutes of agitation. The crystals remained in the suspension after 48 hours.

It is specifically intended that the present disclosure not be limited to the embodiments and illustrations contained herein, but include modified forms of those embodiments including portions of the embodiments and combinations of elements of different embodiments as come within the scope of the following claims.

## Claims

1. A process comprising:
reacting boric acid with potassium carbonate in an aqueous solution; and
forming a stable aqueous suspension comprising particles of potassium pentaborate.

2. The process of claim 1 comprising
reacting the boric acid and the potassium carbonate at a boric acid to potassium carbonate molar ratio from 5:1 to 15:1.

3. The process of any of claims 1-2 comprising
forming a stable aqueous suspension of potassium pentaborate having at least 8% (w/w) boron and at least 5% (w/w) potassium oxide (K₂O).

4. The process of any of claims 1-3 comprising
reacting the boric acid with the potassium carbonate to the exclusion of potassium hydroxide.

5. The process of claim 4 comprising
reacting the boric acid with the potassium carbonate to the exclusion of sodium.

6. The process of any of claims 1-5 comprising
adding a viscosity modifier to water to form an aqueous suspension medium;
adding the boric acid and the potassium carbonate to the aqueous suspension medium; and
forming the stable aqueous suspension comprising particles of potassium pentaborate.

7. The process of claim 6 comprising
adding from 0.1% to 5% (w/w) viscosity modifier to the water;
reacting the boric acid and the potassium carbonate at a boric acid to potassium carbonate molar ratio from 10:1; and
forming a stable aqueous suspension of particles of potassium pentaborate comprising
(i) from 30% to 60% (w/w) potassium pentaborate particles,
(ii) from 8% to 13% (w/w) boron,
(iii) from 5% to 20% (w/w) potassium oxide,
(iv) a pH from 6.5 to 8.5,
(v) a dynamic viscosity from 1000 cP to 7000 cP at 19.3°C, and
(vi) a bulk density from 1.2 to 1.4 g/mL.

8. A composition comprising:
a stable aqueous suspension comprising particles of potassium pentaborate;
the suspension comprising at least 8% (w/w) boron and at least 5% (w/w) potassium oxide (K₂O).

9. The composition of claim 8, wherein the stable aqueous suspension exhibits no potassium pentaborate particles that are visibly perceptible to the naked eye after the aqueous suspension has been stored at ambient conditions for a duration of at least two weeks.

10. The composition of any of claims 8-9 comprising at least one viscosity modifier.

11. The composition of claim 10, wherein the at least one viscosity modifier is selected from the group consisting of bentonite clay, xanthan gum, acrylates, and combinations thereof.

12. The composition of any of claims 8-11, wherein the stable aqueous suspension has a dynamic viscosity from 1000 cP to 7000 cP at 19.3°C.

13. The composition of any of claims 8-12, wherein the stable aqueous suspension has a bulk density from 1.2 to 1.4 g/mL.

14. The composition of any of claims 8-13, wherein the stable aqueous suspension has a pH from 6.5 to 8.5.

15. The composition of any of claims 8-14, wherein the potassium pentaborate particles have an average particle size from 1 µm to 50 µm.
